# EUROPÄISCHE PATENTSCHRIFT

(11) **EP 4 585 960 B1**
(45) Veröffentlichungstag und Bekanntmachung des Hinweises auf die Patenterteilung: **12.11.2025**
(21) Anmeldenummer: 24151572.5
(22) Anmeldetag: 12.01.2024
(51) Int. Cl.: G01S 7/40, G01S 7/48, G01S 13/91, G01S 7/41, G01S 7/497, G01S 13/931, G01S 17/931

(54) **KALIBRIERUNGSLOSE EINRICHTUNG VON ROIS FÜR EINEN SENSOR**
CALIBRATION-FREE INSTALLATION OF ROIS FOR A SENSOR
CONFIGURATION SANS ÉTALONNAGE DE ROIS POUR UN CAPTEUR

(43) Veröffentlichungstag der Anmeldung: 16.07.2025
(73) Patentinhaber: SICK AG, 79183 Waldkirch (DE)
(72) Erfinder: von Bergner, Alexander, 22967 Tremsbüttel (DE); Tietgen, Birte, 22089 Hamburg (DE)

(56) Entgegenhaltungen:
- EP-A2- 3 936 885
- EP-B1- 1 032 848
- DE-A1- 102014 206 248
- DE-B4- 102020 101 060

## Beschreibung

Die vorliegende Erfindung betrifft das Gebiet der Einrichtung von ROI's (Region Of Interests) für einen Sensor innerhalb eines gewünschten Bereichs, welcher beispielsweise eine besondere Gefahrensituation beinhalten kann und daher von dem Sensor überwacht werden soll. In solch einem Fall ist das Einrichten einer ROI gleichbedeutend mit dem Einrichten eines sogenannten Schutzfelds, welches dann durch den Sensor erfasst und überwacht wird. Ein gewünschter Bereich kann beispielsweise durch einen Verkehrsbereich, wie eine Straßenkreuzung gegeben sein. Alternativ kann ein gewünschter Bereich auch der Bewegungsbereich eines Fertigungsroboters sein, wobei ein Mensch in den Bewegungsbereich des Fertigungsroboters eingreifen kann, woraus sich die Notwendigkeit ergibt, ein solches Schutzfeld einzurichten. Ein gewünschter Bereich wird im Weiteren als ein Objektfeld bezeichnet.

Um ein Schutzfeld oder eine ROI für einen Sensor einzurichten, muss die Anbau- oder Montageposition des Sensors in Bezug auf das Objektfeld, das die Gefahrensituation beinhalten kann, bekannt sein, d.h. die Montageposition des Sensors muss in Bezug auf das Objektfeld kalibriert werden. Unter Kalibration ist vorliegend die Bestimmung der räumlichen Montageposition des Sensors in Bezug auf das Objektfeld zu verstehen, beispielsweise die geometrische Positionsbestimmung der Montageposition des Sensors innerhalb einer a priori bekannten Karte des Objektfeldes. Relativ zu dieser Montageposition kann dann mittels der a-priori bekannten Karte des Objektfeldes, die ROI oder das Schutzfeld eingerichtet, bzw. ausgewählt werden. Die Anbauposition des Sensors in Bezug auf das Objektfeld, d.h. die relative Montageposition, kann mittels Referenzsensorik, oder mittels Referenzobjekten oder mittels spezieller Messtechnik ermittelt werden. Ist keine a-priori Karte vorhanden, so kann eine ROI auch durch mehrfaches Positionieren eines Referenzobjektes im Objektfeld und im Sichtfeld des Sensors unmittelbar festgelegt werden.

Unter einem Referenzobjekt ist z.B. ein Winkelreflektor oder ein Retroreflektor mit ausreichend großem Rückstreuquerschnitt zu verstehen. Das Verfahren der Bestimmung der Montageposition des Sensors kann alternativ auch mittels mehrerer Winkelreflektoren, die an jeweils unterschiedlichen Positionen im Objektfeld angebracht sind, durchgeführt werden. Alternativ dazu kann die Montageposition des Sensors relativ zum Objektfeld auch über Winkelmessgeräte bestimmt werden.

Ist beispielweise das Objektfeld durch eine Verkehrssituation, beispielsweise durch eine Verkehrskreuzung dargestellt, so behindert der Vermessungs- oder Kalibrierungsvorgang zur Bestimmung der Montageposition des Sensors den laufenden Verkehr und erfordert ggf., dass die Verkehrskreuzung, oder einzelne Spuren, für die Dauer der Positionsbestimmung gesperrt werden. Dies stellt neben dem Kalibrierungsvorgang als solchen, einen weiteren zusätzlichen Aufwand dar. Überdies kann, je nach der Verkehrssituation an einer Kreuzung, die Sperrung bestimmter Spuren gar nicht erfolgen, wodurch die Vermessung zusätzlich erschwert wird und was einen Einfluss auf die Genauigkeit der Bestimmung der Montageposition haben kann und somit auch auf die Genauigkeit, mit der eine ROI oder ein Schutzfeld bestimmt wird. Darüber hinaus liegt nicht immer eine a priori Karte vor, welche die benötigten Maße zur Auswahl einer ROI oder eines Schutzfeldes aufweist. Ferner erfordert der Einsatz von Referenzobjekten oder von Referenzsensorik spezialisiertes Know-How und ist nur durch geschultes Personal durchführbar.

Es ist daher eine Aufgabe der Erfindung, ein Verfahren zur Einrichtung von ROls oder Schutzfeldern bereit zu stellen, welches eine Kalibrierung, d.h. eine genaue Bestimmung der Montageposition des Sensors im gewünschten Bereich nicht benötigt und eine a-priori Karte des gewünschten Bereichs nicht erfordert.

Die Aufgabe wird gelöst durch das Verfahren zur kalibrierungslosen Einrichtung von Schutzfeldern für einen stationären Sensor an einem Objektfeld nach Anspruch 1 sowie das System nach Anspruch 14 und das Computerprogrammprodukt zur Erstellung einer Spurkarte nach Anspruch 12. Weitere Ausführungsformen sind Gegenstand der abhängigen Ansprüche.

Das erfindungsgemäße Verfahren zur Einrichtung von Schutzfeldern für einen stationären Sensor an einem Objektfeld, insbesondere an einer Verkehrssituation, wobei unter einem Schutzfeld ein definierter Bereich eines Sichtfeldes des Sensors zu verstehen ist, der innerhalb des Objektfeldes ist, weist die folgenden Schritte auf:
- Ausrichten des Sensors an einer Montageposition, wobei das Sichtfeld des Sensors eine vorbestimmte Ansicht des Objektfeldes erfasst;
- Inbetriebnahme des Sensors an der Montageposition, dadurch gekennzeichnet, dass der Sensor sich bewegende Objekte des Objektfeldes verfolgt und jeweils eine Trajektorie eines sich bewegenden Objektes als Teil eines Datensatzes einer Datenverarbeitungseinheit zur Erstellung einer Spurkarte bereitstellt, bis sich jeweils aus einer Anzahl der Trajektorien von sich auf vorgeschriebenen Routen des Objektfeldes bewegender Objekte, Gruppierungen der Trajektorien zu jeweiligen Pfaden ergeben, wobei die Datenverarbeitungseinheit den Datensatz räumlich skaliert und die jeweiligen Pfade automatisch berechnet, indem jede Trajektorie durch ein Set von Parametern klassifiziert wird, um die Gruppierungen von Trajektorien zu erkennen und aus einer erkannten Gruppierung der Trajektorien einen Pfad zu berechnen, indem die räumliche Verteilung der Trajektorien nach vorbestimmten Kriterien ausgewertet wird und der jeweilige Pfad als ein durchschnittlicher Repräsentant aus der räumlich dichteren Verteilung und dem räumlich dichteren Verlauf von einer Anzahl von Trajektorien der sich auf vorgeschriebenen Routen bewegenden Objekte durch die Datenverarbeitungseinheit automatisch bestimmt wird, so dass die vorgeschriebenen Routen des Objektfeldes anhand der jeweiligen Pfade, erkennbar sind;
- Einrichten der Schutzfelder, indem dem Anwender eine zweidimensionale Karte der Spurkarte über eine Benutzerschnittstelle bereitgestellt wird, so dass der Anwender die vorgeschriebenen Routen in Bezug auf die Montageposition auf der zweidimensionalen Karte erkennt und die Schutzfelder auf der zweidimensionalen Karte bestimmen kann; oder
- Einrichten der Schutzfelder, indem die Schutzfelder anhand der Spurkarte automatisch erkannt werden und insbesondere dem Anwender eine zweidimensionale Karte der Spurkarte mit den erkannten Schutzfeldern über eine Benutzerschnittstelle bereitgestellt wird, so dass der Anwender die vorgeschriebenen Routen und die erkannten Schutzfelder in Bezug auf die Montageposition auf der zweidimensionalen Karte zum Überprüfen und/oder Korrigieren erkennt.

Unter kalibrierungslos ist zu verstehen, dass ein Vermessen der Montageposition des Sensors in Bezug auf das Objektfeld nicht notwendig ist. Unter Einrichten ist zu verstehen, dass eine ROI oder ein Schutzfeld erstellt wird, welches der Sensor überwacht.

Unter einem Objektfeld ist vorliegend ein Bereich zu verstehen, der durch einen Sensor zumindest abschnittsweise erfasst werden kann. Ein Objektfeld kann durch eine Verkehrssituation, beispielsweise eine Verkehrskreuzung repräsentiert sein.

Unter einem Schutzfeld ist vorliegend eine ROI, Region Of Interest, zu verstehen, d.h. ein speziell markierter oder definierter Bereich, der innerhalb eines Objektfeldes von besonderem Interesse ist und durch den Sensor, d.h. durch dessen Sichtfeld, erfasst werden kann.

Unter dem Sichtfeld des Sensors ist vorliegend der Erfassungsbereich des Sensors zu verstehen, welcher den Raum oder den Bereich beschreibt, den ein Sensor abdeckt oder "sieht". Das Sichtfeld gibt an, in welchem Raum oder entlang welchem Bereich der Sensor in der Lage ist, Informationen oder Daten zu erfassen, zu messen oder wahrzunehmen. Das Sichtfeld ist ein nach geometrischer Optik definierter Bereich, und kann je nach Sensortyp und je Anwendung unterschiedlich sein. Bei einem Radarsensor hängt das Sichtfeld beispielsweise von der Ausrichtung der Radarantenne ab. Das Sichtfeld eines Radarsensors kann konisch oder sektorförmig sein.

Der Sensor wird zur Einrichtung eines Schutzfeldes an einer Montageposition ausgerichtet. Die Ausrichtung des Sensors an der vorgesehenen Montageposition erfolgt dabei ungefähr, d.h. die, insbesondere räumliche, Genauigkeit mit der der Sensor an der vorgesehen Montageposition montiert wird, ist nur so hoch, dass das Sichtfeld des Sensors ausgerichtet ist, um die vorgesehene Funktion des Sensors, wie beispielsweise die optische Erfassung von Objekten innerhalb des Objektfeldes, grundsätzlich zu erfüllen, so das keine als relevant erachteten Bereiche des Objektfeldes außerhalb des Sichtfeldes des Sensors liegen.

Unter der Montageposition des Sensors ist diejenige Position zu verstehen, an der der Sensor sich physikalisch befindet, d.h. auf welche die Messungen des Sensors referenziert werden können, d.h. welche beispielsweise als ein Nullpunkt eines Koordinatensystems angesehen werden kann. Da die Daten des Sensors absolute Werte, z.B. Abstände statischer und bewegter Objekte zum Sensor umfassen, kann die Montageposition in Bezug auf eine aus den Sensordaten erstellte zweidimensionale Karte sozusagen als Variante einer Spurkarte, skaliert werden.

Unter einem Objekt ist vorliegend ein Gegenstand innerhalb des Objektfeldes zu verstehen, d.h. insbesondere ein Verkehrsteilnehmer in einer Verkehrssituation. Ein Objekt umfasst Verkehrsteilnehmer, wie ein Fahrrad, einen Fußgänger, einen PKW oder einen LKW. Ein Objekt kann ein sich im Objektfeld bewegendes Objekt oder ein im Objektfeld statisches, d.h. ein sich nicht bewegendes Objekt sein. Ein Objekt kann sich, während es vom Sensor erfasst bzw. verfolgt wird, in zeitlicher Abfolge bewegen oder statisch sein.

Der Sensor verfolgt die Objekte innerhalb des Objektfeldes, solange die Objekte sich innerhalb des Sichtfeldes des Sensors befinden, wobei die zeitliche Abfolge der vom Sensor bestimmten Positionsdaten des Objektes innerhalb des Objektfeldes zu einer Trajektorie zusammengefasst werden.

Unter einer Trajektorie ist vorliegend die aufgezeichnete Bahn zu verstehen, die das Objekt in dem Objektfeld über die Zeit hinweg zurückgelegt hat. Die Trajektorie beschreibt somit die räumliche Bewegung des Objektes innerhalb des Objektfeldes. Die Trajektorie kann beispielsweise als eine grafische Linie in einer zweidimensionalen Karte als eine Spurkarte dargestellt sein. Die Trajektorie liegt in Form eines Datensatzes vor oder bildet einen Teil eines Datensatzes, welcher der Datenverarbeitungseinheit zur Erstellung der Spurkarte bereitgestellt wird. Der Datensatz weist daher räumliche Dimensionen auf, beispielsweise X, Y Raumkomponenten, welche insbesondere durch skalierte Daten des Sensors einen räumlichen Maßstab aufweisen. Der Datensatz kann ferner eine zeitliche Dimension aufweisen. Der Datensatz kann weitere Informationen umfassen, z.B. einen Skalierungswert, oder Informationen über die Objekte, wie deren Geschwindigkeit. Das Bereitstellen der jeweiligen Trajektorien an die Datenverarbeitungseinheit kann für jede Trajektorie einzeln, d.h. sequenziell, erfolgen oder die vorbestimmte Anzahl der Trajektorien wird zu einem einzigen Datensatz zusammengefügt und in ihrer Gesamtheit als ein Datenpaket an die Datenverarbeitungseinheit übermittelt.

Unter einer Spurkarte ist vorliegend der ausgewertete Datensatz in Form eines numerischen, insbesondere mehrdimensionalen Datensatzes, z.B. in Form einer Matrix, zu verstehen, d.h. ein Datenobjekt. Insbesondere kann aber auch die grafische Darstellung des Datensatzes, der von dem Sensor erfassten Trajektorien, von den sich auf vorgeschriebenen Routen bewegenden Objekten im Objektfeld und in Bezug auf die Sensorposition, d.h. insbesondere auch eine zweidimensionale Top-Down Ansicht des Objektfeldes, d.h. als eine zweidimensionale Karte der Spurkarte aus der Vogelperspektive als eine Variante der Spurkarte angesehen werden, wobei in der Spurkarte Pfade automatisch erkennbar sind, die aus Gruppierungen der Trajektorien bestimmt wurden und die im Wesentlichen den vorgeschriebenen Routen entsprechen.

Sobald eine bestimmte Anzahl von Trajektorien bereitgestellt ist, wird die Spurkarte erzeugt. Die Erzeugung einer Spurkarte durch Auswertung des Datensatzes erfolgt so, dass der Datensatz räumlich skaliert wird und eine zweidimensionale Karte der Spurkarte als eine Variante der Spurkarte erzeugt wird, die in Bezug auf die Montageposition des Sensors, die jeweiligen Trajektorien aufweist.

Die Erzeugung einer Spurkarte erfolgt durch automatische Auswertung des Datensatzes. Der Datensatz wird räumlich skaliert und Gruppierungen von Trajektorien werden durch Auswerten der räumlichen Verteilung der Trajektorien nach vorbestimmten Kriterien in dem Datensatz automatisch bestimmt und zu einem jeweiligen Pfad zusammengefasst und vermerkt, so dass eine zweidimensionale Karte der Spurkarte die jeweiligen Pfade, insbesondere auch die jeweiligen Trajektorien, in Bezug auf die Montageposition des Sensors automatisch aufweist.

Liegt eine zweidimensionale Karte der Spurkarte vor, kann ein Benutzer anhand der automatisch erzeugten Pfade die vorgeschriebenen Routen unmittelbar erkennen. In solch einem Fall kann der Benutzer die vorgeschlagene automatische Erkennung der Pfade optional bestätigen und/oder korrigieren indem er den Vorschlag z.B. mit einer a-priori Karte vergleicht. Sind die Pfade durch den Benutzer auf der zweidimensionalen Karte bestätigt, kann der Benutzer über eine Benutzerschnittstelle die Schutzfelder in die zweidimensionale Karte einzeichnen.

Unter einem Pfad ist vorliegend ein durchschnittlicher Repräsentant als ein Bereich oder als eine Linie zu verstehen, der sich aus der Gruppierung von Trajektorien, auch als Cluster bezeichnet, ergibt, d.h. aus der räumlich dichteren Verteilung und dem räumlich dichteren Verlauf von einer Anzahl von Trajektorien der sich auf vorgeschriebenen Routen bewegenden Objekte. Unter einem Bereich bzw. einer Linie kann somit eine aus dem Verlauf der Trajektorien innerhalb einer Gruppierung gebildete durchschnittliche Fläche oder eine durchschnittliche Linie, z.B. eine zwischen den Verläufen der Trajektorien gemittelte Linie, zu verstehen sein. Ein solcher Bereich bzw. eine solche Linie, wäre als ein repräsentativer Bereich bzw. als eine repräsentative Linie anzusehen, d.h. als ein durchschnittlicher Repräsentant.

Die Gruppierung von Trajektorien erfolgt automatisch, wobei für jede Gruppierung der Trajektorien ein "durchschnittlicher Repräsentant" der Gruppierung automatisch ermittelt.

Ein Pfad entspricht somit im Wesentlichen einer vorgeschriebenen Route, beispielsweise einer Straße. Somit lassen sich die vorgeschriebenen Routen anhand der Pfade rekonstruieren. Auf der zweidimensionalen Karte der automatisch erzeugten Spurkarte, können die Pfade zusammen mit den Trajektorien, beispielsweise als schraffierte, eingefärbte, repräsentative Bereiche und/oder Linien grafisch in der zweidimensionalen Karte dargestellt werden. Die Pfade können bei der automatischen Auswertung zusätzlich an typische Objektfelddaten angepasst werden. Typische Objektfelddaten wären beispielswiese die typische Breite eines Radweges oder einer PKW-Fahrspur, oder typische Kurvenradien.

Unter Erkennen ist folglich das numerische Erkennen zu verstehen. D.h. der Vorgang aus einer Anzahl von Trajektorien eine räumliche Anhäufung von Trajektorien zu einem Cluster oder zu einer Gruppierung von Trajektorien numerisch zu erkennen und aus dieser einen Pfad und somit den wesentlichen Verlauf einer vorgeschriebenen Route zu identifizieren. Das numerische Erkennen kann insbesondere durch maschinelles Lernen umgesetzt sein.

Eine vorgeschriebene Route des Objektfeldes umfasst beispielsweise eine Fahrspur einer Fahrbahn, einen Radweg oder einen Fußweg, einen Übergang, auf oder entlang derer sich die Objekte regelmäßig oder hauptsächlich bewegen.

Zum Einrichten von ROI's oder Schutzfeldern wird dem Benutzer eine grafische Benutzeroberfläche zum Markieren der Schutzfelder oder ROls in der zweidimensionalen Karte der Spurkarte bereitgestellt. Die Markierung eines Schutzfeldes kann durch geometrische Formen vorbestimmt oder durch den Benutzer mittels Polygonzug Eingabe festgelegt werden. Die in der zweidimensionalen Karte als eine Spurkarte markierten ROls oder Schutzfelder werden dann aus der zweidimensionalen Karte in die mehrdimensionale Spurkarte übertragen, beispielsweise indem die ROl's oder Schutzfelder aus dem zweidimensionalen Kartenformat in das Datenformat der mehrdimensionalen Spurkarte zurück transformiert wurden, wobei die Transformationsvorschrift aus der Erstellung der zweidimensionalen Karte bekannt ist. Eine mehrdimensionale Spurkarte kann beispielsweise im Datenformat einer mehrdimensionalen Matrix ausgebildet sein.

Die Schutzfelder können auch automatisch eingerichtet werden. Dabei wird ein Schutzfeld oder eine ROI anhand einer Spurkarte automatisch erkannt, beispielsweise indem vorbestimmte Kriterien für eine ROI festgelegt werden. Die Kriterien sind je nach Objektfeld unterschiedlich. Handelt es sich beispielsweise um eine Verkehrskreuzung, kann als ein Kriterium eine vorbestimmte Gefahrenschwelle dienen. Nach dieser Gefahrenschwelle wird beispielsweise ein Radweg, der eine PKW-Fahrspur kreuzt, als ein grundsätzlich zu überwachendes Schutzfeld a priori eingestuft, so dass wenn eine solche Kreuzung von Pfaden bestimmt wird, auch automatisch ein Schutzfeld an der Kreuzung eingerichtet wird. Dass es sich um einen Radweg oder eine PKW-Fahrspur handelt, kann zusätzlich in der Spurkarte vermerkt werden. Alternativ können als ein Kriterium zum automatischen Einrichten von Schutzfeldern grundsätzlich sich in der Spurkarte kreuzende Pfade als Bereiche angesehen werden, in denen Schutzfelder eingerichtet werden sollen.

Die Datenverarbeitungseinheit kann Teil des Sensors sein. Alternativ kann die Datenverarbeitungseinheit als eine Cloud basierte Applikation ausgebildet sein, beispielsweise ist der Sensor mit einem Server verbunden und der Server dient als eine Datenverarbeitungseinheit oder der Server leitet die vom Sensor empfangenen Daten an die Datenverarbeitungseinheit weiter, z.B. an einen PC oder an ein Mobiltelefon eines Anwenders. Unter einer Datenverarbeitungseinheit ist vorliegend ein Computer, z.B. ein PC und/oder ein Mobiltelefon zu verstehen.

Als eine Benutzerschnittstelle ist vorliegend eine grafische Schnittstelle zu verstehen, die über eine Eingabemöglichkeit zum Einrichten, insbesondere Einzeichnen, Überprüfen und/oder Korrigieren einer ROI durch einen Benutzer verfügt sowie über eine Ausgabemöglichkeit, die das grafische Darstellen einer zweidimensionalen Karte der Spurkarte zur Ansicht für einen Benutzer ermöglicht. Eine grafische Benutzerschnittstelle kann ein PC oder ein Mobiltelefon sein.

Das Verfahren hat den Vorteil, dass der Sensor an dem Objektfeld nicht präzise ausgerichtet und vermessen werden muss, denn durch die Erzeugung einer Spurkarte ist die Position des Sensors im Wesentlichen bereits auf die vorgeschriebenen Routen des Objektfeldes kalibriert. Eine genauere Kalibrierung der Montageposition ist nicht notwendig. Geleichzeitig entfällt die Notwendigkeit einer a-priori Karte des Objektfeldes, da diese durch die Spurkarte ausgebildet ist. Somit wird das Verfahren der Kalibration des Sensors an dem Objektfeld automatisiert und deutlich vereinfacht, da die Verfahrensschritte des Ausrichtens und Vermessens sowie des eventuellen Abgleiches mit einer a-priori Karte entfallen. Es besteht keine Notwendigkeit, das Objektfeld, beispielsweise eine Straßenkreuzung, zur Kalibrierung des Sensors temporär zu sperren.

In einer besonders bevorzugten Ausführungsform des erfindungsgemäßen Verfahrens wird der Datenverarbeitungseinheit eine Anzahl von mindestens 50 Trajektorien, oder 50 bis 200 oder 50 bis 150 oder 50 bis 100 oder 50 Trajektorien bereitgestellt.

Dabei kann ein Zähler des Sensors die Anzahl der jeweiligen Trajektorien der sich auf vorgeschriebenen Routen bewegenden Objekte erfassen und der Zähler kann eingerichtet sein, eine Abbruchbedingung für das Bereitstellen der Trajektorien an die Datenverarbeitungseinheit auszulösen. Eine Spurkarte umfasst die bis zur Abbruchbedingung übertragenen Trajektorien.

Dies hat den weiteren Vorteil, dass die Kalibration des Sensors und die Einrichtung eines Schutzfeldes in einer kurzen Zeit möglich ist, was den zeitlichen Aufwand der Installation und damit die Kosten reduziert.

In einer besonders bevorzugten Ausführungsform des erfindungsgemäßen Verfahrens werden ferner Informationen zur Klassifizierung der sich auf den vorgeschriebenen Routen des Objektfeldes bewegenden Objekte durch den Sensor bereitgestellt und können auf der Spurkarte vermerkt sein.

Das Bereitstellen der Informationen zur Klassifizierung der sich auf den vorgeschriebenen Routen bewegenden Objekte hat insbesondere den Vorteil, dass diese Informationen zur Parametrisierung der Trajektorien verwendet werden können, um beispielsweise eine Gruppierung von Trajektorien automatisch zu erkennen. Dabei wird jede Trajektorie durch einen oder mehrere Parameter, bzw. durch eine Menge aus Parametern, d.h. ein Parameterset klassifiziert. Die Informationen umfassen daher diese Parameter. Parameter können, z.B. eine Durchschnittsgeschwindigkeit, ein Anfangs- und ein Endpunkt der Trajektorie, eine Richtung der Trajektorie, eine Winkeländerung z.B. in Bezug auf eine Achse eines Koordinatensystems, eine Krümmung, oder eine Fahrrichtung, beispielsweise in Form eines Richtungsvektors sein. Im Anschluss wird aus einer jeweiligen Gruppierung von Trajektorien ein jeweiliger Pfad automatisch berechnet.

Das automatische Berechnen bzw. Erkennen der Gruppierungen kann durch maschinelles Lernen erfolgen. Für jedes Cluster wird dann ein jeweiliger "durchschnittlicher Repräsentant" der Gruppierung, bzw. des Clusters automatisch ermittelt, was einem jeweiligen Pfad entspricht.

Indem die Informationen auf der Spurkarte vermerkt werden, wird die Lesbarkeit einer zweidimensionalen Karte der Spurkarte bei grafischer Darstellung für einen Benutzer intuitiver, d.h. die auf der Karte basierende Erkennung von Pfaden, beispielsweise der Verkehrsführung an einer Verkehrskreuzung, ist zur Verbesserung der Lesbarkeit der Karte durch einen Benutzer visuell unterstützt. Dies vereinfacht es dann für einen Benutzer, ein Schutzfeld auf der Karte basierend auf der Verkehrsführung auszuwählen. Beispielsweise kann eine Information zur Klassifizierung durch eine Geschwindigkeitsinformation der sich auf den vorgeschriebenen Routen des Objektfeldes bewegenden Objekte auf der zweidimensionalen Karte gegeben sein, so dass zwischen Geschwindigkeiten größer 10 km/h für einen Fußweg, größer ungefähr 20 km/h für einen Radweg und größer ungefähr 50 km/h für eine PKW-Fahrspur, insbesondere farblich, auf der zweidimensionalen Karte der Spurkarte unterschieden wird.

In einer besonders bevorzugten Ausführungsform des erfindungsgemäßen Verfahrens umfassen die Informationen zur Klassifizierung einen Objekttyp, und/oder eine Objektgeschwindigkeit und/oder eine Objektgröße und/oder eine Reflektivität des Objektes. Ein Objekttyp kann beispielsweise ein Fahrrad, ein LKW, ein Auto oder ein Fußgänger sein.

Dies hat den Vorteil, dass die Lesbarkeit der zweidimensionalen Karte der Spurkarte für einen Benutzer intuitiver wird, d.h. die Erfassung der Verkehrssituation durch einen Benutzer ist visuell unterstützt, weshalb beispielsweise ein Gefahrenbereich einer Verkehrskreuzung, welcher zusätzlich eine Radspur und/oder einen Fußweg umfasst, einfacher als ein zu überwachender Bereich, d.h. als ein Schutzfeld, durch einen Benutzer erkannt und durch einen Benutzer markiert werden kann. Unter der Reflektivität des Objektes ist die Reflektivität bezüglich der vom Sensor zur Erfassung des Objektes abgestrahlten elektromagnetischen Wellen von einem Radar und/oder Lidar-Sensor zu verstehen.

In einer besonders bevorzugten Ausführungsform des erfindungsgemäßen Verfahrens sind die Trajektorien gleicher Objekttypen von sich auf vorgeschriebenen Routen des Objektfeldes bewegender Objekte, auf der zweidimensionalen Karte der Spurkarte, insbesondere farblich, gleich dargestellt.

Dies hat den Vorteil einer verbesserten Lesbarkeit der zweidimensionalen Karte der Spurkarte, wodurch sich eine leichtere Einschätzung eines Gefahrenbereichs und damit eine vereinfachte Schutzfeldeinrichtung ergibt.

In einer besonders bevorzugten Ausführungsform des erfindungsgemäßen Verfahrens wird in einem zusätzlichen Schritt eine a-priori Karte in eine Benutzeroberfläche geladen und die zweidimensionale Karte der Spurkarte über die a-priori Karte skaliert, wobei die zweidimensionale Karte der Spurkarte die Montageposition des Sensors aufweist.

Dies hat den Vorteil, dass die Anbauposition des Sensors maßstabsgetreu zur a-priori Karte der Kreuzung kalibriert wird. Beispielsweise kann durch das Markieren einer Entfernung in der geladenen a-priori Karte der Maßstab der erzeugten zweidimensionalen Karte der Spurkarte mit der geladenen Karte angeglichen werden. Der Bediener kann in einem weiteren Schritt die zweidimensionale Karte der Spurkarte und die geladene Karte zueinander verschieben und rotieren, bis beide Karten zueinander kongruent sind. Damit wäre die Kalibrierung nach Rücktransformation der zweidimensionalen Karte auf die Spurkarte abgeschlossen und die ROI's bzw. Schutzfelder, die innerhalb der Spurkarte und/oder der a-priori Karte erstellt wurden, können auf den Sensor angewendet werden.

In einer besonders bevorzugten Ausführungsform des erfindungsgemäßen Verfahrens weist der Sensor einen Radarsensor und/oder einen LIDAR Sensor auf.

Unter Radar ist vorliegend "Radio Detection and Ranging" zu verstehen, d.h. eine Technologie, die elektromagnetische Wellen im Bereich von 100 MHz bis 300 GHz verwendet, um Objekte in der Umgebung, d.h. innerhalb eines Objektfeldes zu erkennen und die Entfernung, Geschwindigkeit und Richtung der Objekte in dem Objektfeld zu messen.

Unter Lidar ist vorliegend "Light Detection and Ranging" zu verstehen, d.h. eine Technologie, die Laserlicht verwendet, um Entfernungen zu Objekten zu messen. Dies geschieht durch das Aussenden von Laserpulsen und durch die Messung der Zeit, die benötigt wird, bis das reflektierte Licht zum Sensor zurückkehrt.

In einer besonders bevorzugten Ausführungsform des erfindungsgemäßen Verfahrens weist das Objektfeld eine Verkehrssituation, insbesondere eine Straßenkreuzung auf.

In einer bevorzugten Ausführungsform des erfindungsgemäßen Verfahrens werden die Pfade durch ein Verfahren des maschinellen Lernens automatisch erkannt, insbesondere werden die Gruppierungen der Trajektorien durch das Verfahren des maschinellen Lernens erkannt, und insbesondere werden erkannte Pfade durch das Verfahren des maschinellen Lernens während des weiteren Betriebes des Sensors überwacht.

Das Überwachen kann so ausgeführt sein, dass ein ROI-Update des Sensors ausgeführt wird und die aktualisierten ROI Daten mit den bisherigen ROI Daten verglichen werden. Dies hat den Vorteil, dass Veränderungen im Objektfeld, beispielsweise der Umbau einer Fahrspur oder der Ausbau eines Radweges automatisch erfasst werden, wenn beispielsweise in regelmäßigen Abständen ein Update der ROI durchgeführt wird. Das Update erkennt die aktuelle ROI automatisch und bei Abweichung der aktuellen von der bisherigen ROI wird eine Meldung an den Benutzer herausgeben. Ferner kann durch das Verfahren des maschinellen Lernens dezentral eine große Menge unterschiedlicher Spurkarten in kurzer Zeit verarbeitet werden. Ferner vorteilhaft können die aktuellen Pfade des ROI-Updates mittels maschinellen Lernens erkannt werden und mit vorherigen Pfaden verglichen werden und als Veränderungen des Objektfeldes einem Benutzer über eine Benutzerschnittstelle angezeigt werden, beispielsweise als ein Warnhinweis.

Beim automatischen Ermitteln eines Pfades, wird der Pfad aus einer erkannten Gruppierung von Trajektorien berechnet, weshalb das Erkennen eines Pfades das Erkennen der Gruppierungen von Trajektorien umfasst. Um eine Gruppierung von Trajektorien erkennen zu können, wird jede Trajektorie durch ein Set aus Parametern klassifiziert. Parameter können, z.B. eine Durchschnittsgeschwindigkeit, ein Anfangs- und ein Endpunkt der Trajektorie, eine Richtung der Trajektorie, eine Winkeländerung z.B. in Bezug auf eine Achse eines Koordinatensystems, eine Krümmung, oder eine durchschnittliche Fahrrichtung sein. Aus einer jeweiligen Gruppierung von Trajektorien wird jeweils ein Pfad berechnet.

In einer besonders bevorzugten Ausführungsform des erfindungsgemäßen Verfahrens wird das Verfahren des maschinellen Lernens anhand virtueller Objektfelder, insbesondere anhand virtueller Verkehrssituationen trainiert.

Dies hat den Vorteil, dass der Lernprozess des Verfahrens des maschinellen Lernens vor Inbetriebnahme des Sensors im Wesentlichen abgeschlossen ist. Unter einem virtuellen Objektfeld ist eine Nachbildung des Objektfeldes zu verstehen, beispielsweise in Form einer am Computer erzeugten virtuellen Umgebung, die dem Objektfeld im Wesentlich entspricht. Unter einer virtuellen Verkehrssituation ist vorliegend eine nachgebildete oder simuliert dargestellte Situation im Bereich des Verkehrs zu verstehen. Diese Simulation kann in einer virtuellen Umgebung, einem Computerprogramm oder einer Modellierungsumgebung erstellt werden und zielt darauf ab, verschiedene Aspekte des Verkehrs und der Verkehrsteilnehmer darzustellen. Eine virtuelle Verkehrssituation kann Objekte aufweisen wie Verkehrsteilnehmer, umfassend jegliche Art von Fahrzeugen, Fußgänger, vorgeschriebene Routen, d.h. Straßen und Infrastruktur, Verkehrsbedingungen, wie Stau, Wetter oder Unfälle, Fahrzeug- und Straßendynamik.

In einer sAusführungsform des erfindungsgemäßen Verfahrens wird das Einrichten der Schutzfelder in der zweidimensionalen Karte der Spurkarte automatisch ausgeführt, insbesondere basierend auf sich kreuzenden Pfaden. Insbesondere können die automatisch eingerichteten Schutzfelder auf einer Benutzerschnittstelle angezeigt werden und durch einen Benutzer bestätigt und/oder korrigiert werden.

Dies hat den Vorteil, dass, z.B. durch ein Computerprogrammprodukt automatisch erkannt werden kann, wo sich Pfade kreuzen und sich kreuzende Pfade grundsätzlich einen Gefahrenbereich darstellen. ROls oder Schutzfelder sind dann durch diejenigen Bereiche des Objektfeldes definiert, die in Fahrtrichtungen der Objekte vor diesen sich kreuzenden Pfaden, d.h. vor den Gefahrenbereichen liegen und können automatisch als solche in der zweidimensionalen Karte der Spurkarte markiert werden.

In einer weiteren Ausführungsform des erfindungsgemäßen Verfahrens wird das Einrichten der Schutzfelder in der Spurkarte durch Verwendung eines Verfahrens des maschinellen Lernens automatisch ausgeführt, insbesondere basierend auf einer Gefahrenschwelle. Mittels einer Gefahrenschwelle kann eine Verkehrssituation automatisch durch das Verfahren des maschinellen Lernens bewertet werden und das Schutzfeld in der Spurkarte basierend auf dieser Bewertung durch das Verfahren des maschinellen Lernens markiert bzw. eingerichtet werden. Insbesondere können die automatisch eingerichteten Schutzfelder auf einer Benutzerschnittstelle angezeigt werden und durch einen Benutzer bestätigt und/oder korrigiert werden.

Dies hat den Vorteil, dass das gesamte Verfahren der Einrichtung einer ROI oder eines Schutzfeldes automatisch ablaufen kann. Weiter vorteilhaft kann ein Verfahren des maschinellen Lernens zum einen die Pfade, d.h. die Erkennung der vorgeschriebenen Routen des Objektfeldes vornehmen und bevorzugt auch die Festlegung einer ROI oder eines Schutzfeldes in der Spurkarte. Dabei wird das Verfahren des maschinellen Lernens an virtuellen Objektfeldern, insbesondere an virtuellen Verkehrssituationen trainiert, wobei diese virtuellen Objektfelder Gefahrensituationen beinhalten, um beispielsweise Unfallsszenarien herbeizuführen und damit zu simulieren. Derartige Unfallszenarien lassen sich dadurch erzeugen, dass beispielsweise Cloud basierte Applikationen, z.B. Computerspiele, durch eine hohe Anzahl von Anwendern gespielt werden und ein Bonussystem den Anwendern den Anreiz gibt, gefährliche Verkehrssituationen herbeizuführen und dabei die gefährlichen Verkehrssituationen zu bewerten. Die Bewertung einer Gefahrensituation, d.h. beispielsweise die Abschätzung des Eintritts einer potenziellen Unfallsituation, kann für den Anwender anhand einer Gefahrenschwelle bewertbar sein. Generiert ein Anwender in der Applikation eine ihm besonders gefährlich erscheinende Verkehrssituation, kann der Anwender der Verkehrssituation eine Gefahrenschwelle zuordnen, beispielsweise indem er auf einer vorbestimmten Skala die vermutete Eintrittswahrscheinlichkeit eines Unfalls für seiner generierte Verkehrssituation angibt. Basierend auf der durch die Cloud Applikation zur Verfügung stehenden Vielzahl von Bewertungen durch unterschiedlichste Anwender kann das Verfahren des maschinellen Lernens anhand der für diese Verkehrssituationen vorliegenden Gefahrenschwellen trainiert werden, so dass das Verfahren des maschinellen Lernens lernt, eine Gefahr in einem Objektfeld eigenständig zu erkennen und einzustufen und diese anhand einer ROI-Markierung einem Benutzer vorschlägt. Das Verfahren des maschinellen Lernens ist somit in die Lage versetzt, aufgrund der trainierten Gefahrenschwellenbewertung ein Schutzfeld für einen Sensor an einer Verkehrssituation eigenständig einzurichten und/oder diese einem Benutzer zur Überprüfung vorzuschlagen.

Computerprogrammprodukt zur Erstellung einer Spurkarte zur kalibrierungslosen Einrichtung von Schutzfeldern für einen stationären Sensor an einem Objektfeld, insbesondere an einer Verkehrssituation, wobei unter einem Schutzfeld ein definierter Bereich eines Sichtfeldes des Sensors zu verstehen ist, der innerhalb des Objektfeldes ist, umfassend Befehle, die bei der Ausführung des Programms durch einen Computer diesen veranlassen, die Spurkarte aus einem Datensatz eines Sensors, insbesondere eines Radarsensors, zu erstellen, wobei der Datensatz jeweilige Trajektorien von sich in einem Objektfeld auf vorgeschriebenen Routen bewegende Objekte aufweist, indem
- der Datensatz räumlich skaliert wird, indem jede Trajektorie durch ein Set von Parametern klassifiziert wird um die Gruppierungen der Trajektorien zu erkennen und aus einer erkannten Gruppierung der Trajektorien ein Pfad berechnet wird, indem die räumliche Verteilung der Trajektorien in dem Datensatz nach vorbestimmten Kriterien ausgewertet wird und der jeweilige Pfad als ein durchschnittlicher Repräsentant aus der räumlich dichteren Verteilung und dem räumlich dichteren Verlauf von einer Anzahl von Trajektorien der sich auf vorgeschriebene Routen bewegenden Objekte automatisch bestimmt wird und eine zweidimensionale Karte der Spurkarte als eine zumindest abschnittsweise Ansicht des Objektfeldes die jeweiligen Pfade, und insbesondere die jeweiligen Trajektorien, aufweisend erzeugt wird.

Die räumliche Verteilung der Trajektorien wird im übermittelten Datensatz zur Erstellung der Spurkarte nach vorbestimmten Kriterien bestimmt. Die Kriterien können die Mindestanzahl von Trajektorien innerhalb einer Gruppierung aufweisen. D.h. eine Gruppierung von Trajektorien ergibt nur dann einen Pfad, wenn die Gruppierung beispielsweise 5 oder 10 oder 20 oder 30 oder 40 oder 50 Trajektorien umfasst. Die Kriterien können ferner die numerische Stetigkeit und/oder Differenzierbarkeit einer Trajektorie umfassen. Beispielsweise wäre eine Trajektorie eines Fahrrades nicht zu berücksichtigen, wenn der Radfahrer absteigt und das Rad auf dem Fußweg anstatt dem Radweg weiterschiebt, was zu einem unstetigen Geschwindigkeitsprofil führt. Oder wenn der Radfahrer auf dem Radweg umdreht. Ferner können die Kriterien Klassifizierungsdaten der Objekte aufweisen. Solche Daten können die Standardbreite eines PKWs, oder die Standardbreite vorgeschriebener Routen aufweisen. Trajektorien von Objekten, die den Klassifizierungsdaten nicht entsprechen, beispielsweise ein Fußgänger auf einem Radweg würde nicht berücksichtigt werden. Unstetigkeiten können z.B. im Ort auftreten, wie bei einem plötzlichen seitlichen Versatz des Objektes und könnten durch einen Detektionsfehler verursacht sein, oder in der Geschwindigkeit auftreten, wie bei einer plötzlichen Geschwindigkeitsveränderung bis hin zum Stillstand oder bei zu hohen Geschwindigkeiten oder bei zu unrealistischen Geschwindigkeiten des Objekttyps.

Zur Erkennung einer Gruppierung von Trajektorien wird jede Trajektorie ferner durch ein Set aus Parametern klassifiziert und damit gruppierbar, z.B. einer Geschwindigkeit, einem Anfangs- und einem Endpunkt der Trajektorie, einer Richtung der Trajektorie, einer Winkeländerung z.B. in Bezug auf eine Achse eines Koordinatensystems, einer Krümmung, einer durchschnittlichen Fahrrichtung. Aus einer jeweiligen Gruppierung von Trajektorien wird in Verbindung mit den vorbestimmten Kriterien jeweils ein Pfad berechnet.

Die zweidimensionale Karte ist zumindest abschnittsweise eine Karte des Objektfeldes, da das Objektfeld größer als das Sichtfeld des Sensors sein kann und das Sichtfeld einen wesentlichen Teil des Objektfeldes erfasst.

In einer bevorzugten Ausführungsform des Computerprogrammprodukts umfasst der Datensatz des Sensors eine Anzahl von mindestens 50 Trajektorien, oder 50 bis 200 oder 50 bis 150 oder 50 bis 100 oder 50 Trajektorien.

System zur kalibrierungslosen Einrichtung von Schutzfeldern für einen stationären Sensor an einem Objektfeld, insbesondere an einer Verkehrssituation, wobei unter einem Schutzfeld ein definierter Bereich eines Sichtfeldes des Sensors zu verstehen ist, der innerhalb des Objektfeldes ist, aufweisend das Computerprogrammprodukt nach Anspruch 12, einen Sensor, eine Datenverarbeitungseinheit und eine Benutzerschnittstelle, wobei der Sensor eingerichtet ist, Trajektorien sich bewegender Objekte als einen Datensatz an die Datenverarbeitungseinheit zur Erstellung einer Spurkarte weiterzuleiten, bis sich jeweils aus einer Anzahl der Trajektorien von sich auf vorgeschriebenen Routen des Objektfeldes bewegender Objekte, Gruppierungen der Trajektorien zu jeweiligen Pfaden ergeben und wobei das Computerprogrammprodukt auf der Datenverarbeitungseinheit ausführbar ist und eingerichtet ist, aus dem Datensatz des Sensors eine Spurkarte zu erstellen, so dass eine zweidimensionale Karte der Spurkarte auf der Benutzerschnittstelle zur Einrichtung und/oder Korrektur eines Schutzfeldes dargestellt werden kann.

Die Trajektorien sich bewegender Objekte können als ein Datensatz, d.h. jeweils einzeln von dem Sensor an die Datenverarbeitungseinheit übertragen werden, oder als ein Datensatz, der eine vorbestimmte Anzahl von den Trajektorien sich bewegender Objekte umfasst.

Weitere bevorzugte Ausgestaltungen des erfindungsgemäßen Verfahrens, des erfindungsgemäßen Systems, zur kalibrierungslosen Einrichtung von Schutzfeldern für einen Sensor an einem Objektfeld und des Computerprogrammprodukts zur Erstellung einer Spurkarte ergeben sich aus der nachfolgenden Beschreibung der Ausführungsbeispiele in Zusammenhang mit den Figuren und deren Beschreibung. Gleiche Teile werden im Wesentlichen durch gleiche Bezugszeichen gekennzeichnet, falls dies nicht anders beschrieben wird, oder sich nicht anders aus dem Kontext ergibt.
Fig. 1 zeigt eine schematische Darstellung einer Ausführungsform einer zweidimensionalen Karte der Spurkarte in der Top-Down Ansicht, mit einem markierten Schutzfeld.
Fig. 2 zeigt eine schematische Darstellung eines Ausschnitts der in Fig. 1 gezeigten zweidimensionalen Karte der Spurkarte, die durch eine vorgeschriebene Route, einen schraffiert dargestellten Pfad sowie eine Gruppierung von Trajektorien ergänzt wurde.
Fig. 3 zeigt eine weitere schematische Darstellung einer zweidimensionalen Karte der Spurkarte, bei der die Pfade als schraffierte Bereiche dargestellt sind und lediglich eine Trajektorie aus der Gruppe von Trajektorien dargestellt ist, weil die Erkennung der Pfade automatisch erfolgt, und der Anwender die Erkennung bestätigen und/oder korrigieren kann.
Fig. 4 zeigt eine schematische Darstellung des Systems zur kalibrierungslosen Einrichtung von Schutzfeldern für einen Sensor an einer Verkehrssituation.

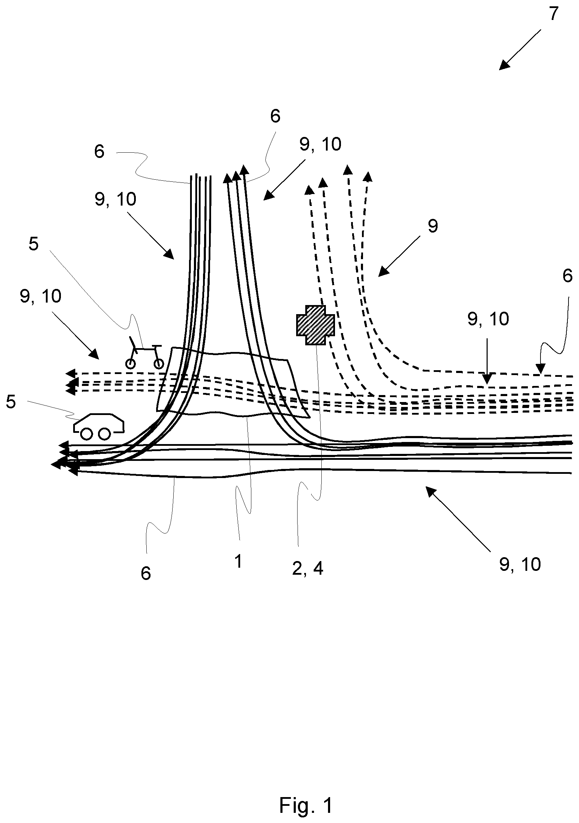

In Fig. 1 ist eine schematische Darstellung einer Ausführungsform der zweidimensionalen Karte 7 der erfindungsgemäßen Spurkarte als eine Top-Down Ansicht gezeigt. Der Sensor 2 ist mittig in der zweidimensionalen Karte 7 angeordnet. In der Ausführungsform sind zwei unterschiedliche Objekte 5, Fahrräder 5 und PKWs 5 gezeigt. Aus der gestrichelt eingezeichneten Gruppierung der Trajektorien 10 der Fahrräder 5, erscheinen zwei unterschiedliche Pfade 9 für Fahrräder 5, denen man die vorgeschriebenen Routen 8 für Fahrräder 5 (nicht eingezeichnet) entnehmen kann. In diesem Fall ergibt sich aus den Pfaden 9 ein Radweg 8 rechts in der zweidimensionalen Karte 7, der sich in etwa der Mitte der Karte 7 verzweigt, angedeutet durch eine weitere, ebenfalls gestrichelt dargestellte Gruppierung von Trajektorien 10. Ein PKW-Pfad 9 ist aus der rechts in der Karte 7 dargestellten Gruppierung 10 durchgezogener Linien von Trajektorien 6 automatisch erkennbar. Dieser PKW-Pfad 9 verzweigt sich in etwa der Mitte der Karte 7. In den PKW-Pfad 9 fügt sich, automatisch erkennbar durch eine weitere Gruppierung von Trajektorien 10, die aus dem oberen Bereich der Karte 7 nach unten verläuft, ein weiterer PKW-Pfad ein.

Die Montageposition 12 des Sensors 2 ist in der Mitte der Karte 7 eingezeichnet. Ferner ist ein Schutzfeld 1 durch einen rechteckförmigen Bereich in der Karte 7 angedeutet. In diesem Fall handelt es sich bei dem Schutzfeld 1 um einen Bereich, in dem ein Radweg 8 zwei unterschiedliche PKW-Fahrspuren 8 kreuzt, woraus sich für die Radfahrer 5 eine Gefahrensituation ergibt und weshalb dieser Bereich von dem Sensor 2 überwacht werden soll.

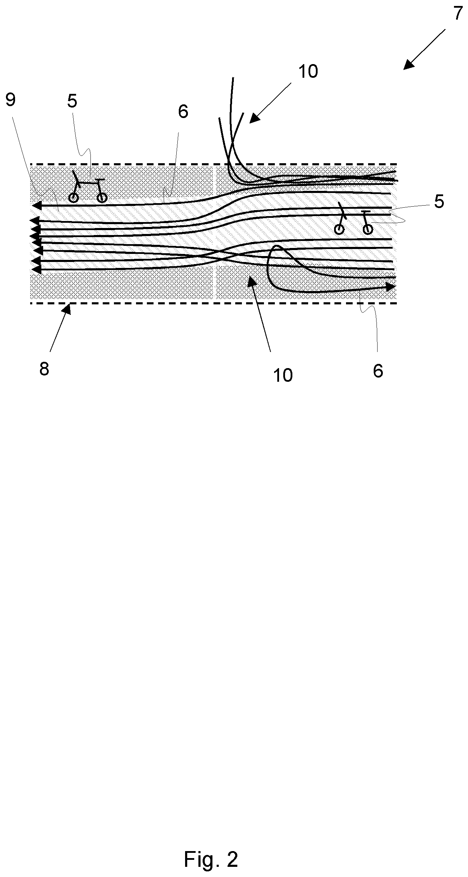

In Fig. 2 ist eine schematische Darstellung eines Ausschnitts der in Fig. 1 gezeigten zweidimensionalen Karte 7 der Spurkarte dargestellt, die durch eine vorgeschriebene Route 8, einen schraffiert dargestellten Pfad 9 sowie eine Gruppierung von Trajektorien 10 ergänzt wurde. Eine erste Gruppierung von Trajektorien 10 von Fahrrädern 5 im linken Bereich von Fig. 2, verläuft innerhalb der vorgeschriebenen Route 8. Diese Gruppering von Trajektorien 10 würde aufgrund der räumlichen Verteilung und dem räumlichen Verlauf der Trajektorien 6, als ein Pfad 9 automatisch erkannt werden. Der sich aus der Gruppierung 10 dann automatisch ergebende Pfad 9 ist in Fig. 2 grau schraffiert dargestellt und entspricht im Wesentlichen der vorgeschriebenen Route 8.

Im rechten unteren Bereich der vorgeschrieben Route 8 ist in Fig. 2 eine Trajektorie 6 mit Richtungsumkehr eingezeichnet. Aufgrund der Anzahl der Trajektorien 6 hat die einzelne, im rechten unteren Bereich der Route 8 zurückverlaufende Trajektorie 6, nur wenig Einfluss auf die Bestimmung der vorgeschriebenen Route 8.

Ferner ist eine Gruppierung von Trajektorien 10 im rechts oberen Bereich der vorgeschriebenen Route 8 in Fig. 2 eingezeichnet, wobei sich die Trajektorien 6 dieser Gruppierung 10 in einer Rechtskurve aus der vorgeschriebenen Route 8 heraus bewegen. Die räumliche Verteilung dieser Trajektorien lässt diese Trajektorien 6 zwar innerhalb der vorgeschriebenen Route 8 abschnittsweise als eine Gruppierung 10 erscheinen, aufgrund der Verzweigung und der unterschiedlichen Längen der Trajektorien 6, die abschnittsweise außerhalb der vorgeschriebenen Route 8 liegen, würden diese aber nicht als ein Pfad 9 automatisch erkannt werden. Die automatische Erkennung der Pfade 9 könnte diese Gruppierung der Trajektorien 10, beispielsweise aufgrund der Kriterien "Verzweigung und Trajektorien 6 Länge" ausschließen.

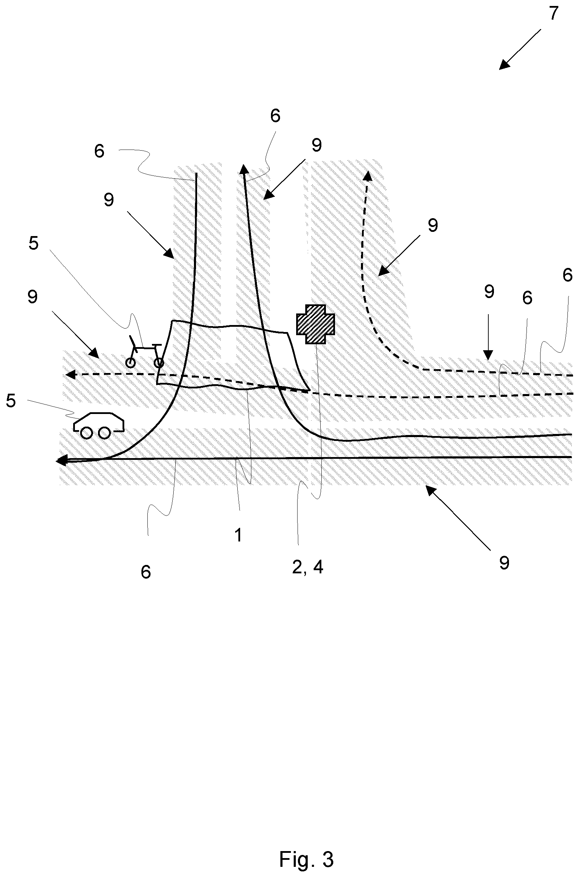

In Fig. 3 ist eine weitere schematische Darstellung einer zweidimensionalen Karte 7 der erfindungsgemäßen Spurkarte gezeigt. In der Darstellung sind die Pfade 9 als schraffierte Bereiche gekennzeichnet. Die Erkennung der Pfade erfolgt automatisch, weshalb lediglich eine Trajektorie 6 aus der Gruppe von Trajektorien 10 als eine repräsentative Trajektorie 6 dargestellt ist. Der Benutzer kann die automatisch vorgeschlagenen Pfade 9 bestätigen und/oder korrigieren. Das in Fig. 3 eingezeichnete Schutzfeld 1 kann ebenfalls automatisch erkannt und in der zweidimensionalen Karte 7 der Spurkarte vermerkt werden, beispielsweise durch maschinelles Lernen und dem Kriterium von sich kreuzenden Pfaden 9 unterschiedlicher Objekte 5, wie hier einem Fahrrad 5 auf einem Radweg 8 einem PKW 5 auf einer PKW-Fahrspur 8, die im Wesentlichen den schraffiert eingezeichneten Pfaden 9 entsprechen.

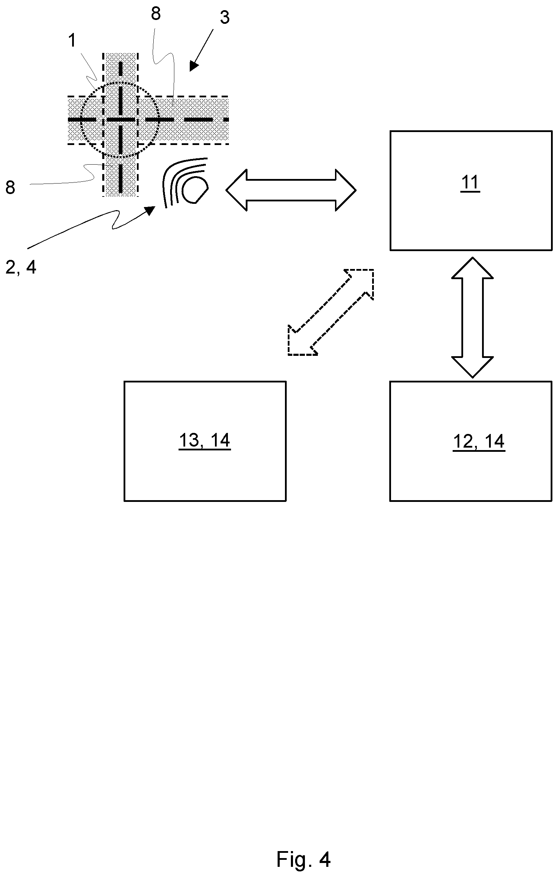

In Fig. 4 ist eine schematische Darstellung einer Ausführungsform des Systems dargestellt. Dabei ist der Sensor 2 an einer Verkehrskreuzung 3 an seiner Montageposition 4 befestigt. Ein Kreis deutet die markierte ROI 1 oder das Schutzfeld 1 an, welches der Sensor 2 überwacht. Die vom Sensor 2 erfassten Trajektorien 6 der sich bewegenden Objekte 5 werden an die Datenverarbeitungseinheit 11 als ein Datensatz weitergeleitet, was durch einen Pfeil zwischen dem Sensor 2 und der Datenverarbeitungseinheit 11 dargestellt ist. Die Weiterleitung kann mittels Kabel oder drahtlos erfolgen, beispielsweise via Ethernet, WLAN oder Bluetooth. Die Datenverarbeitungseinheit 11 ist in Fig. 4 als ein Server ausgebildet. Auf dem Sever ist das Computerprogrammprodukt ausführbar eingerichtet. Das Computerprogrammprodukt erstellt die zweidimensionale Karte 7 der Spurkarte und leitet diese an einen PC 12 (Pfeil mit durchgezogener Linie) und/oder an ein Mobiltelefon 13 (Pfeil mit gestrichelter Linie) zur grafischen Darstellung und/oder Überprüfung bzw. Korrektur durch einen Benutzer weiter. In dieser Ausführungsform bilden der PC 12 oder das Mobiltelefon 13 eine jeweilige Benutzerschnittstelle 14. Dies ermöglicht es dem Benutzer, die zweidimensionale Karte 7 mit einer a-priori Karte zu vergleichen und das Schutzfeld 1 in der Karte 7 durch die Benutzerschnittstelle 14 einzurichten, z.B. das Schutzfeld erstmals einzuzeichnen, oder ein automatisch vorgeschlagenes Schutzfeld zu korrigieren und/oder zu bestätigen. Ist das Schutzfeld 7 eingerichtet, werden die Daten an den Sensor 2 zur Erfassung des eingerichteten Schutzfeldes 1 zurückgesendet. Ebenfalls kann der PC 12 oder das Mobiltelefon 13 als Datenverarbeitungseinheit 11 und als Benutzerschnittstelle 14 verwendet werden.

## Patentansprüche

1. Verfahren zur kalibrierungslosen Einrichtung von Schutzfeldern (1) für einen stationären Sensor (2) an einem Objektfeld (3), insbesondere an einer Verkehrssituation, wobei unter einem Schutzfeld ein definierter Bereich eines Sichtfeldes des Sensors (2) zu verstehen ist, der innerhalb des Objektfeldes (3) ist, aufweisend die folgenden Schritte:
- Ausrichten des Sensors (2) an einer Montageposition (4), wobei das Sichtfeld des Sensors eine vorbestimmte Ansicht des Objektfeldes (3) erfasst;
- Inbetriebnahme des Sensors (2) an der Montageposition (4), **dadurch gekennzeichnet, dass** der Sensor (2) sich bewegende Objekte (5) des Objektfeldes (3) verfolgt und jeweils eine Trajektorie (6) eines sich bewegenden Objektes (5) als Teil eines Datensatzes einer Datenverarbeitungseinheit (11) zur Erstellung einer Spurkarte, bereitstellt, bis sich jeweils aus einer Anzahl der Trajektorien (6) von sich auf vorgeschriebenen Routen (8) des Objektfeldes (3) bewegende Objekte (5), Gruppierungen der Trajektorien (10) zu jeweiligen Pfaden (9) ergeben, wobei die Datenverarbeitungseinheit (11) den Datensatz räumlich skaliert und die jeweiligen Pfade automatisch berechnet, indem jede Trajektorie durch ein Set von Parametern klassifiziert wird, um die Gruppierungen der Trajektorien (10) zu erkennen und aus einer erkannten Gruppierung der Trajektorien (10) einen Pfad zu berechnen, indem die räumliche Verteilung der Trajektorien nach vorbestimmten Kriterien ausgewertet wird und der jeweilige Pfad als ein durchschnittlicher Repräsentant aus der räumlich dichteren Verteilung und dem räumlich dichteren Verlauf von einer Anzahl von Trajektorien der sich auf vorgeschriebenen Routen (8) bewegenden Objekte (5) durch die Datenverarbeitungseinheit (11) automatisch bestimmt wird, so dass die vorgeschriebenen Routen (8) des Objektfeldes (3) anhand der jeweiligen Pfade (9) erkennbar sind;
- Einrichten der Schutzfelder (1), indem dem Anwender eine zweidimensionale Karte (7) der Spurkarte über eine Benutzerschnittstelle (14) bereitgestellt wird, so dass der Anwender die vorgeschriebenen Routen (8) in Bezug auf die Montageposition (4) auf der zweidimensionalen Karte (7) erkennt und die Schutzfelder (1) auf der zweidimensionalen Karte (7) bestimmen kann; oder
- Einrichten der Schutzfelder (1), indem die Schutzfelder (1) anhand der Spurkarte automatisch erkannt werden und insbesondere dem Anwender eine zweidimensionale Karte (7) der Spurkarte mit den erkannten Schutzfeldern (1) über eine Benutzerschnittstelle (14) bereitgestellt wird, so dass der Anwender die vorgeschriebenen Routen (8) und die erkannten Schutzfelder (1) in Bezug auf die Montageposition (4) auf der zweidimensionalen Karte (7) Überprüfen und/oder Korrigieren kann.

2. Verfahren nach Anspruch 1, **dadurch gekennzeichnet, dass** der Datenverarbeitungseinheit (11) die Anzahl von mindestens 50 Trajektorien (6), oder 50 bis 200 oder 50 bis 150 oder 50 bis 100 oder 50 Trajektorien (6) bereitgestellt wird.

3. Verfahren nach einem der vorherigen Ansprüche, **dadurch gekennzeichnet, dass** der Sensor (2) der Datenverarbeitungseinheit (11) Informationen zur Klassifizierung der sich auf den vorgeschriebenen Routen (8) des Objektfeldes (3) bewegenden Objekte (5) bereitstellt.

4. Verfahren nach Anspruch 3, **dadurch gekennzeichnet, dass** die Informationen zur Klassifizierung einen Objekttyp und/oder eine Objektgeschwindigkeit und/oder eine Objektgröße und/oder eine Reflektivität des Objektes umfassen.

5. Verfahren nach einem der vorherigen Ansprüche, **dadurch gekennzeichnet, dass** die Trajektorien (6) gleicher Objekttypen von sich auf den vorgeschriebenen Routen (8) des Objektfeldes (3) bewegender Objekte (5) auf der zweidimensionalen Karte (7) der Spurkarte, insbesondere farblich, gleich dargestellt werden.

6. Verfahren nach einem der vorherigen Ansprüche, **dadurch gekennzeichnet, dass** in einem zusätzlichen Schritt eine a-priori Karte in die Benutzerschnittstelle (14) geladen wird und die zweidimensionale Karte (7) der Spurkarte über die a-priori Karte skaliert wird, wobei die zweidimensionale Karte (7) der Spurkarte die Montageposition (4) des Sensors (2) aufweist.

7. Verfahren nach einem der vorherigen Ansprüche, **dadurch gekennzeichnet, dass** der Sensor (2) einen Radarsensor und/oder einen Lidar Sensor aufweist.

8. Verfahren nach einem der vorherigen Ansprüche, **dadurch gekennzeichnet, dass** das Objektfeld (3) eine Verkehrssituation, insbesondere eine Straßenkreuzung aufweist.

9. Verfahren nach einem der vorherigen Ansprüche, insbesondere nach Anspruch 3, **dadurch gekennzeichnet, dass** die Pfade (9) durch ein Verfahren des maschinellen Lernens automatisch erkannt werden, insbesondere dass die Gruppierungen der Trajektorien durch das Verfahren des maschinellen Lernens erkannt werden, und insbesondere erkannte Pfade durch das Verfahren des maschinellen Lernens während des weiteren Betriebes des Sensors überwacht werden.

10. Verfahren nach Anspruch 9, **dadurch gekennzeichnet, dass** das Verfahren des maschinellen Lernens anhand virtueller Objektfelder (3), insbesondere anhand virtueller Verkehrssituationen trainiert wird.

11. Verfahren nach Anspruch 1, 9 oder 10, **dadurch gekennzeichnet, dass** das Einrichten der Schutzfelder (1) in der zweidimensionalen Karte (7) der Spurkarte automatisch ausgeführt wird, insbesondere basierend auf sich kreuzenden Pfaden (9), und wobei insbesondere die automatisch eingerichteten Schutzfelder (1) auf einer Benutzerschnittstelle (14) angezeigt und durch einen Benutzer bestätigt und/oder korrigiert werden können.

12. Computerprogrammprodukt zur Ausführung des Verfahrens nach Anspruch 1, zur Erstellung einer Spurkarte zur kalibrierungslosen Einrichtung von Schutzfeldern (1) für einen Sensor (2) an einem Objektfeld (3), insbesondere an einer Verkehrssituation, wobei unter einem Schutzfeld ein definierter Bereich eines Sichtfeldes des Sensors (2) zu verstehen ist, der innerhalb des Objektfeldes (3) ist, umfassend Befehle, die bei der Ausführung des Programms durch die Datenverarbeitungseinheit (11) diese veranlassen, die Spurkarte aus einem Datensatz eines Sensors (2), insbesondere eines Radarsensors (2) und/oder Lidarsensors (2), zu erstellen.

13. Computerprogrammprodukt nach Anspruch 12, **dadurch gekennzeichnet, dass** der Datensatz des Sensors (2) eine Anzahl von mindestens 50 Trajektorien (6), oder 50 bis 200 oder 50 bis 150 oder 50 bis 100 oder 50 Trajektorien (6) aufweist.

14. System zur kalibrierungslosen Einrichtung von Schutzfeldern (1) für einen stationären Sensor (2) an einem Objektfeld (3), insbesondere an einer Verkehrssituation, wobei unter einem Schutzfeld ein definierter Bereich eines Sichtfeldes des Sensors (2) zu verstehen ist, der innerhalb des Objektfeldes (3) ist, aufweisend das Computerprogrammprodukt nach Anspruch 12, den Sensor (2), eine Datenverarbeitungseinheit (11) und eine Benutzerschnittstelle (14), wobei der Sensor (2) eingerichtet ist, Trajektorien (6) sich bewegender Objekte (5) als einen Datensatz an die Datenverarbeitungseinheit (11) zur Erstellung einer Spurkarte weiterzuleiten, bis sich jeweils aus einer Anzahl der Trajektorien (6) von sich auf vorgeschriebenen Routen (8) des Objektfeldes (3) bewegende Objekte (5), Gruppierungen der Trajektorien (10) zu jeweiligen Pfaden (9) ergeben und wobei das Computerprogrammprodukt auf der Datenverarbeitungseinheit (11) ausführbar ist und eingerichtet ist, aus dem Datensatz des Sensors (2) die Spurkarte zu erstellen, so dass eine zweidimensionale Karte (7) der Spurkarte auf der Benutzerschnittstelle (14) zur Einrichtung und/oder Korrektur eines Schutzfeldes (1) dargestellt werden kann.

## Claims

1. Method for calibration-free setup of protection fields (1) for a stationary sensor (2) at an object field (3), in particular at a traffic situation, wherein a protection field is understood to be a defined area of a field of view of the sensor (2) that is within the object field (3), comprising the following steps:
- Aligning the sensor (2) at a mounting position (4), wherein the field of view of the sensor captures a predetermined view of the object field (3);
- Commissioning the sensor (2) at the mounting position (4), **characterized in that** the sensor (2) tracks moving objects (5) of the object field (3) and provides, for each moving object (5), a trajectory (6) as part of a data set to a data processing unit (11) for creating a track map, until, from a number of trajectories (6) of objects (5) moving on prescribed routes (8) of the object field (3), groupings of the trajectories (10) into respective paths (9) result, wherein the data processing unit (11) spatially scales the data set and automatically calculates the respective paths by classifying each trajectory by a set of parameters to recognize the groupings of the trajectories (10) and to calculate a path from a recognized grouping of the trajectories (10), by evaluating the spatial distribution of the trajectories according to predetermined criteria, and the respective path is automatically determined by the data processing unit (11) as an average representative from the spatially denser distribution and the spatially denser course of a number of trajectories of objects (5) moving on prescribed routes (8), so that the prescribed routes (8) of the object field (3) are recognizable based on the respective paths (9);
- Setting up the protection fields (1) by providing the user with a two-dimensional map (7) of the track map via a user interface (14), so that the user recognizes the prescribed routes (8) in relation to the mounting position (4) on the two-dimensional map (7) and can determine the protection fields (1) on the two-dimensional map (7); or
- Setting up the protection fields (1) by automatically recognizing the protection fields (1) based on the track map and, in particular, providing the user with a two-dimensional map (7) of the track map with the recognized protection fields (1) via a user interface (14), so that the user can check and/or correct the prescribed routes (8) and the recognized protection fields (1) in relation to the mounting position (4) on the two-dimensional map (7).

2. Method according to claim 1, **characterized in that** the data processing unit (11) is provided with at least 50 trajectories (6), or 50 to 200 or 50 to 150 or 50 to 100 or 50 trajectories (6).

3. Method according to one of the preceding claims, **characterized in that** the sensor (2) provides the data processing unit (11) with information for classifying the objects (5) moving on the prescribed routes (8) of the object field (3).

4. Method according to claim 3, **characterized in that** the information for classification comprises an object type and/or an object speed and/or an object size and/or a reflectivity of the object.

5. Method according to one of the preceding claims, **characterized in that** the trajectories (6) of the same object types of objects (5) moving on the prescribed routes (8) of the object field (3) are represented equally, in particular by color, on the two-dimensional map (7) of the track map.

6. Method according to one of the preceding claims, **characterized in that**, in an additional step, an a priori map is loaded into the user interface (14) and the two-dimensional map (7) of the track map is scaled over the a priori map, wherein the two-dimensional map (7) of the track map comprises the mounting position (4) of the sensor (2).

7. Method according to one of the preceding claims, **characterized in that** the sensor (2) comprises a radar sensor and/or a lidar sensor.

8. Method according to one of the preceding claims, **characterized in that** the object field (3) comprises a traffic situation, in particular a road intersection.

9. Method according to one of the preceding claims, in particular according to claim 3, **characterized in that** the paths (9) are automatically recognized by a machine learning method, in particular that the groupings of the trajectories are recognized by the machine learning method, and in particular recognized paths are monitored by the machine learning method during further operation of the sensor.

10. Method according to claim 9, **characterized in that** the machine learning method is trained based on virtual object fields (3), in particular based on virtual traffic situations.

11. Method according to claim 1, 9 or 10, **characterized in that** the setup of the protection fields (1) in the two-dimensional map (7) of the track map is performed automatically, in particular based on intersecting paths (9), and wherein, in particular, the automatically set up protection fields (1) can be displayed on a user interface (14) and confirmed and/or corrected by a user.

12. Computer program product for executing the method according to claim 1, for creating a track map for calibration-free setup of protection fields (1) for a sensor (2) at an object field (3), in particular at a traffic situation, wherein a protection field is understood to be a defined area of a field of view of the sensor (2) that is within the object field (3), comprising commands that, when executed by the data processing unit (11), cause it to create the track map from a data set of a sensor (2), in particular a radar sensor (2) and/or lidar sensor (2).

13. Computer program product according to claim 12, **characterized in that** the data set of the sensor (2) comprises at least 50 trajectories (6), or 50 to 200 or 50 to 150 or 50 to 100 or 50 trajectories (6).

14. System for calibration-free setup of protection fields (1) for a stationary sensor (2) at an object field (3), in particular at a traffic situation, wherein a protection field is understood to be a defined area of a field of view of the sensor (2) that is within the object field (3), comprising the computer program product according to claim 12, the sensor (2), a data processing unit (11), and a user interface (14), wherein the sensor (2) is configured to forward trajectories (6) of moving objects (5) as a data set to the data processing unit (11) for creating a track map, until, from a number of trajectories (6) of objects (5) moving on prescribed routes (8) of the object field (3), groupings of the trajectories (10) into respective paths (9) result, and wherein the computer program product is executable on the data processing unit (11) and configured to create the track map from the data set of the sensor (2), so that a two-dimensional map (7) of the track map can be displayed on the user interface (14) for setting up and/or correcting a protection field (1).

## Revendications

1. Procédé pour l'établissement sans calibration de champs de protection (1) pour un capteur stationnaire (2) sur un champ d'objet (3), en particulier sur une situation de circulation, dans lequel un champ de protection est défini comme une zone définie d'un champ de vision du capteur (2) située à l'intérieur du champ d'objet (3), comprenant les étapes suivantes:
- Alignement du capteur (2) à une position de montage (4), dans lequel le champ de vision du capteur capte une vue prédéterminée du champ d'objet (3);
- Mise en service du capteur (2) à la position de montage (4), **caractérisé en ce que** le capteur (2) suit des objets (5) en mouvement du champ d'objet (3) et fournit, pour chaque objet (5) en mouvement, une trajectoire (6) en tant que partie d'un ensemble de données à une unité de traitement de données (11) pour la création d'une carte de trajectoires, jusqu'à ce que, à partir d'un nombre de trajectoires (6) d'objets (5) se déplaçant sur des itinéraires prescrits (8) du champ d'objet (3), des groupements de trajectoires (10) en chemins respectifs (9) résultent, dans lequel l'unité de traitement de données (11) met à l'échelle spatialement l'ensemble de données et calcule automatiquement les chemins respectifs en classifiant chaque trajectoire par un ensemble de paramètres afin de reconnaître les groupements de trajectoires (10) et de calculer un chemin à partir d'un groupement reconnu de trajectoires (10), en évaluant la distribution spatiale des trajectoires selon des critères prédéterminés, et le chemin respectif étant déterminé automatiquement par l'unité de traitement de données (11) comme représentant moyen à partir de la distribution plus dense spatialement et du parcours plus dense spatialement d'un nombre de trajectoires d'objets (5) se déplaçant sur des itinéraires prescrits (8), de sorte que les itinéraires prescrits (8) du champ d'objet (3) sont reconnaissables sur la base des chemins respectifs (9);
- Établissement des champs de protection (1) en fournissant à l'utilisateur une carte bidimensionnelle (7) de la carte de trajectoires via une interface utilisateur (14), de sorte que l'utilisateur reconnaît les itinéraires prescrits (8) par rapport à la position de montage (4) sur la carte bidimensionnelle (7) et peut déterminer les champs de protection (1) sur la carte bidimensionnelle (7); ou
- Établissement des champs de protection (1) en reconnaissant automatiquement les champs de protection (1) sur la base de la carte de trajectoires et, en particulier, en fournissant à l'utilisateur une carte bidimensionnelle (7) de la carte de trajectoires avec les champs de protection (1) reconnus via une interface utilisateur (14), de sorte que l'utilisateur peut vérifier et/ou corriger les itinéraires prescrits (8) et les champs de protection (1) reconnus par rapport à la position de montage (4) sur la carte bidimensionnelle (7).

2. Procédé selon la revendication 1, **caractérisé en ce que** l'unité de traitement de données (11) reçoit au moins 50 trajectoires (6), ou 50 à 200 ou 50 à 150 ou 50 à 100 ou 50 trajectoires (6).

3. Procédé selon l'une des revendications précédentes, **caractérisé en ce que** le capteur (2) fournit à l'unité de traitement de données (11) des informations pour la classification des objets (5) se déplaçant sur les itinéraires prescrits (8) du champ d'objet (3).

4. Procédé selon la revendication 3, **caractérisé en ce que** les informations de classification comprennent un type d'objet et/ou une vitesse de l'objet et/ou une taille de l'objet et/ou une réflectivité de l'objet.

5. Procédé selon l'une des revendications précédentes, **caractérisé en ce que** les trajectoires (6) de mêmes types d'objets (5) se déplaçant sur les itinéraires prescrits (8) du champ d'objet (3) sont représentées de manière identique, en particulier par couleur, sur la carte bidimensionnelle (7) de la carte de trajectoires.

6. Procédé selon l'une des revendications précédentes, **caractérisé en ce qu'**à une étape supplémentaire, une carte a priori est chargée dans l'interface utilisateur (14) et la carte bidimensionnelle (7) de la carte de trajectoires est mise à l'échelle sur la carte a priori, dans lequel la carte bidimensionnelle (7) de la carte de trajectoires comporte la position de montage (4) du capteur (2).

7. Procédé selon l'une des revendications précédentes, **caractérisé en ce que** le capteur (2) comprend un capteur radar et/ou un capteur lidar.

8. Procédé selon l'une des revendications précédentes, **caractérisé en ce que** le champ d'objet (3) comprend une situation de circulation, en particulier un carrefour.

9. Procédé selon l'une des revendications précédentes, en particulier selon la revendication 3, **caractérisé en ce que** les chemins (9) sont reconnus automatiquement par un procédé d'apprentissage automatique, en particulier **en ce que** les groupements de trajectoires sont reconnus par le procédé d'apprentissage automatique, et en particulier les chemins reconnus sont surveillés par le procédé d'apprentissage automatique pendant le fonctionnement ultérieur du capteur.

10. Procédé selon la revendication 9, **caractérisé en ce que** le procédé d'apprentissage automatique est entraîné sur la base de champs d'objet virtuels (3), en particulier sur la base de situations de circulation virtuelles.

11. Procédé selon la revendication 1, 9 ou 10, **caractérisé en ce que** l'établissement des champs de protection (1) sur la carte bidimensionnelle (7) de la carte de trajectoires est effectué automatiquement, en particulier sur la base de chemins (9) croisés, et **en ce que**, en particulier, les champs de protection (1) établis automatiquement peuvent être affichés sur une interface utilisateur (14) et confirmés et/ou corrigés par un utilisateur.

12. Produit de programme informatique pour l'exécution du procédé selon la revendication 1, pour la création d'une carte de trajectoires pour l'établissement sans calibration de champs de protection (1) pour un capteur (2) sur un champ d'objet (3), en particulier sur une situation de circulation, dans lequel un champ de protection est défini comme une zone définie d'un champ de vision du capteur (2) située à l'intérieur du champ d'objet (3), comprenant des instructions qui, lors de l'exécution du programme par l'unité de traitement de données (11), amènent celle-ci à créer la carte de trajectoires à partir d'un ensemble de données d'un capteur (2), en particulier d'un capteur radar (2) et/ou d'un capteur lidar (2).

13. Produit de programme informatique selon la revendication 12, **caractérisé en ce que** l'ensemble de données du capteur (2) comprend au moins 50 trajectoires (6), ou 50 à 200 ou 50 à 150 ou 50 à 100 ou 50 trajectoires (6).

14. Système pour l'établissement sans calibration de champs de protection (1) pour un capteur stationnaire (2) sur un champ d'objet (3), en particulier sur une situation de circulation, dans lequel un champ de protection est défini comme une zone définie d'un champ de vision du capteur (2) située à l'intérieur du champ d'objet (3), comprenant le produit de programme informatique selon la revendication 12, le capteur (2), une unité de traitement de données (11) et une interface utilisateur (14), dans lequel le capteur (2) est conçu pour transmettre des trajectoires (6) d'objets (5) en mouvement en tant qu'ensemble de données à l'unité de traitement de données (11) pour la création d'une carte de trajectoires, jusqu'à ce que, à partir d'un nombre de trajectoires (6) d'objets (5) se déplaçant sur des itinéraires prescrits (8) du champ d'objet (3), des groupements de trajectoires (10) en chemins respectifs (9) résultent, et dans lequel le produit de programme informatique est exécutable sur l'unité de traitement de données (11) et est conçu pour créer la carte de trajectoires à partir de l'ensemble de données du capteur (2), de sorte qu'une carte bidimensionnelle (7) de la carte de trajectoires puisse être affichée sur l'interface utilisateur (14) pour l'établissement et/ou la correction d'un champ de protection (1).
